# EUROPEAN PATENT APPLICATION

(11) **EP 4 832 098 A1**
(43) Date of publication of application: **28.10.2026**
(21) Application number: 26173623.5
(22) Date of filing: 21.04.2026
(51) Int. Cl.: H01M 4/38, H01M 10/42, H01M 50/00, H01M 50/46, H01M 50/466

(54) **ELECTRODE ASSEMBLY FOR SECONDARY BATTERY, AND SECONDARY BATTERY INCLUDING THE SAME**

(30) Priority: 23.04.2025 KR 20250052911
(71) Applicant: SK On Co., Ltd., Seoul 03161 (KR)
(72) Inventor: PARK, Seong Jin, 34124 Daejeon (KR); JEON, Hae Ryong, 34124 Daejeon (KR); KONG, Sung Ho, 34124 Daejeon (KR); KIM, Youn Young, 34124 Daejeon (KR); CHOI, Jae Hoon, 34124 Daejeon (KR); HWANG, Hye Su, 34124 Daejeon (KR)
(74) Representative: Prüfer & Partner mbB Patentanwälte · Rechtsanwälte

(57) **Abstract**

The present disclosure relates to an electrode assembly for a secondary battery may include: a positive electrode; a negative electrode; a separator shaped like a sheet extending along a first direction and bent in a zigzag shape; and a second coating line formed on the separator, wherein the bending of the separator causes a plurality of insertion spaces to be formed along a second direction, the separator includes a plurality of support portions and a plurality of bending portions, and the second coating lines are formed in at least a portion of the plurality of bending portions.

## Description

### BACKGROUND OF THE INVENTION

### 1. Field

The present disclosure relates to an electrode assembly for a secondary battery, and a secondary battery including the same.

### 2. Description of the Related Art

Lithium metal is a negative electrode material having a low electrochemical reduction potential and a high specific capacity of 3,860 mAh/g, and is attracting attention as a next-generation negative electrode material for lithium secondary batteries because a battery including a negative electrode made of the lithium metal can significantly improve gravimetric and volumetric energy density compared to a conventional lithium secondary battery using a graphite negative electrode.

However, due to the high reactivity of the lithium metal itself, a lithium metal negative electrode is likely to cause side reactions with an electrolyte. In addition, when uneven current concentration during charging and discharging causes non-uniform deposition, dendritic dendrites may be formed and grown on the surface of the negative electrode. As a result, the capacity and cycle life of the secondary battery may be deteriorated. In particular, the dendrites grown excessively penetrating a separator may lead to a short circuit between a positive electrode and the negative electrode, thereby resulting in a critical risk.

### SUMMARY OF THE INVENTION

An aspect of the present disclosure is to provide an electrode assembly, in which non-uniform deposition of lithium ions is prevented during charging and discharging, thereby suppressing the formation and growth of dendrites.

Another aspect of the present disclosure is to provide a secondary battery having improved cycle life and safety.

Meanwhile, the present disclosure may be widely applied to electric vehicles, battery charging stations, energy storage systems (ESS), and other battery-related green technologies such as photovoltaics and wind power. The present disclosure may also be used in eco-friendly mobility, including electric vehicles and hybrid vehicles, to prevent climate change by suppressing air pollution and greenhouse gas emissions.

According to an embodiment of the present disclosure, an electrode assembly for a secondary battery may include: a positive electrode; a negative electrode; a separator shaped like a sheet extending along a first direction and bent in a zigzag shape; and a second coating line formed on the separator, wherein the bending of the separator causes a plurality of insertion spaces to be formed along a second direction, the separator includes a plurality of support portions and a plurality of bending portions, and the second coating lines are formed in at least a portion of the plurality of bending portions.

In the electrode assembly for a secondary battery according to an embodiment, the second coating line may have insulating properties.

In the electrode assembly for a secondary battery according to an embodiment, the second coating line may have an electrolyte swelling degree in an electrolytic solution of 20% or less.

In the electrode assembly for a secondary battery according to an embodiment, the second coating line may have adhesiveness.

In the electrode assembly for a secondary battery according to an embodiment, the second coating line may include at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

The secondary battery electrode assembly according to an embodiment may further include a first coating line formed on the separator, wherein the first coating line and the second coating line extend in directions intersecting each other, and the first coating lines are formed on at least a portion of the plurality of support portions.

In the electrode assembly for a secondary battery according to an embodiment, the first coating line may have insulating properties.

In the electrode assembly for a secondary battery according to an embodiment, the first coating line may have an electrolyte swelling degree in an electrolytic solution of 20% or less.

In the electrode assembly for a secondary battery according to an embodiment, the first coating line may have adhesiveness.

In the electrode assembly for a secondary battery according to an embodiment, the first coating line may include at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

In the electrode assembly for a secondary battery according to an embodiment, the first coating line may extend in a direction parallel to the first direction, and is formed as a pair spaced apart in a third direction intersecting the first direction.

In the electrode assembly for a secondary battery according to an embodiment, each of the plurality of support portions may include a support surface supporting the positive or negative electrode along the second direction, and a cover surface opposite the support surface, and the first coating line may be formed on the support surface.

In the electrode assembly for a secondary battery according to an embodiment, each of the plurality of bending portions may include an inner surface surrounding one of the plurality of insertion spaces, and an outer surface opposite the inner surface, and the second coating line may be formed on the outer surface.

In the electrode assembly for a secondary battery according to an embodiment, the second coating line may extend in a direction parallel to a third direction intersecting the first direction.

In the electrode assembly for a secondary battery according to an embodiment, the second coating lines adjacent along the second direction may be in contact with each other.

In the electrode assembly for a secondary battery according to an embodiment, the second coating line may be in contact with one of the first coating lines adjacent along the first direction.

In the electrode assembly for a secondary battery according to an embodiment, the first coating line and the second coating line being in contact with each other may cause an electrode placement portion to be formed on the plurality of support portions, and the positive electrode may be disposed in the electrode placement portion.

In the electrode assembly for a secondary battery according to an embodiment, the positive electrode may include a positive electrode coated portion including a positive electrode active material layer formed on a positive electrode collector, and a positive electrode uncoated portion formed outside the positive electrode coated portion, and the positive electrode may satisfy Equation 1 below. [Equation 1] $1 < As / Ac \leq 1.2$

In Equation 1, As is an area of the electrode placement portion, and Ac is the area of the positive electrode coated portion.

In the electrode assembly for a secondary battery according to an embodiment, the negative electrode may include a lithium metal negative electrode.

A secondary battery according to the present disclosure may include: the foregoing electrode assembly; an exterior member in which the electrode assembly is accommodated; and an electrolyte accommodated together with the electrode assembly within the exterior member.

According to an aspect of the present disclosure, there is provided an electrode assembly, in which non-uniform deposition of lithium ions is prevented during charging and discharging, thereby suppressing the formation and growth of dendrites.

According to another aspect of the present disclosure, there is provided a secondary battery having improved cycle life and safety.

### BRIEF DESCRIPTION OF THE DRAWINGS

FIG. 1 is a view illustrating an example of an electrode assembly according to an embodiment of the present disclosure.
FIG. 2 is a cross-sectional view taken along line A-A' of FIG. 1 as viewed in the Y direction.
FIG. 3 is a view illustrating an example of a separator according to an embodiment of the present disclosure.
FIG. 4 is a view illustrating an example of the separator of FIG. 3 in an unbent state.
FIG. 5 is an enlarged view of region B in FIG. 3.
FIG. 6 is a view illustrating an example in which a first coating line and a second coating line are formed on the separator of FIG. 3.
FIG. 7 is a view illustrating an example of the separator of FIG. 6 in an unbent state
FIG. 8 is a view illustrating an example of a positional relationship between a support portion and a bending portion in the separator of FIG. 6.
FIG. 9 is a view illustrating an example in which a positive electrode is disposed in an electrode arrangement portion of FIG. 8.

### DETAILED DESCRIPTION

The embodiments described herein may be modified in various different forms, and thus the technology according to an embodiment is not limited to the embodiments described below. Furthermore, throughout the specification, the terms "comprise," "include," "contain," or "have" are intended to specify the presence of stated elements, but do not preclude the presence or addition of one or more other elements, materials or processes, uncles expressly stated otherwise.

As used herein, the terms "same" or "uniform" may mean substantially the same or uniform within an allowable margin of error, unless otherwise specified. For example, when certain components or measured property values are described as being the same, this may include not only cases in which the two compared objects are completely identical, but also cases in which they are identical within an acceptable error range. In addition, when the measured property value is described as being the same, it may mean that a difference between the measured values of the objects is less than about 5%, specifically less than 3%, and more specifically less than 1%.

As used herein, when two objects is described as being perpendicular to each other, or as being parallel or aligned with each other, this includes not only geometrically perpendicularity or parallelism, but also configurations within a slight margin of error.

As used herein, numerical ranges include lower and upper limits and all values within such ranges, increments logically derived from the shape and width of the defined range, all values defined therein, and all possible combinations of the upper and lower limits of the numerical ranges defined in different ways.

As used herein, unless otherwise defined, the term "about" may be construed to include values within 30%, 25%, 20%, 15%, 10%, or 5% of a stated value.

As used herein, the use of the terms "first," "second," "third," and the like before any component is only intended to avoid confusion between the components referred to, and is independent of the order, significance, or subordinate relationship among the components. For example, an embodiment may be implemented including only a second component without a first component.

As used herein, "X-direction," "Y-direction," and "Z-direction" may refer to any one direction that constitutes a Cartesian coordinate system, in which the directions are perpendicular to one another in three-dimensional space.

As used herein, the term "electrically connected" may encompass, without limitation, any connection method by which a plurality of objects are in electrical connection with each other. According to various aspects, the plurality of objects may be directly connected to each other, or may be connected through a third object serving as an intermediary.

As used herein, a configuration defined as a "...part," "...module," or "...unit" may mean, without limitation, a single component or a set of two or more identical or similar components having common functional aspects. Such a set of components may be configured by any combination of hardware and/or software without limitation.

As used herein, the term "disposed" is intended to encompass, without limitation, any positional relationship in which one object can be positioned adjacent to another object. By way of non-limiting example, this may include coating one object on another object, bonding one object to another object with an adhesive material, attachment based on heat and/or pressure, or simply positioning or fixing at least a portion of one object so that at least a portion of one object can be in contact with at least a portion of another object within a given space.

As used herein, the term "secondary battery" may refer to a battery that generates electrical energy through oxidation and reduction reactions occurring when ions, more specifically cations such as lithium ions, are inserted into and extracted from a positive electrode and a negative electrode. Specifically, the term "secondary battery" may refer to any one of a lithium cobalt oxide battery, a high-nickel lithium-ion battery, a lithium iron phosphate battery, a lithium-ion battery, a lithium polymer battery, a lithium-sulfur battery, a nickel-metal hydride battery, a nickel-cadmium battery, a sodium-ion battery, and an all-solid-state battery. More specifically, as used herein, the term "secondary battery" may refer to a lithium-ion secondary battery, but is not necessarily limited thereto.

Hereinafter, the present disclosure will be described in more detail. However, the following description is provided for illustrative purposes only and is not intended to the specific embodiment described by way of example.

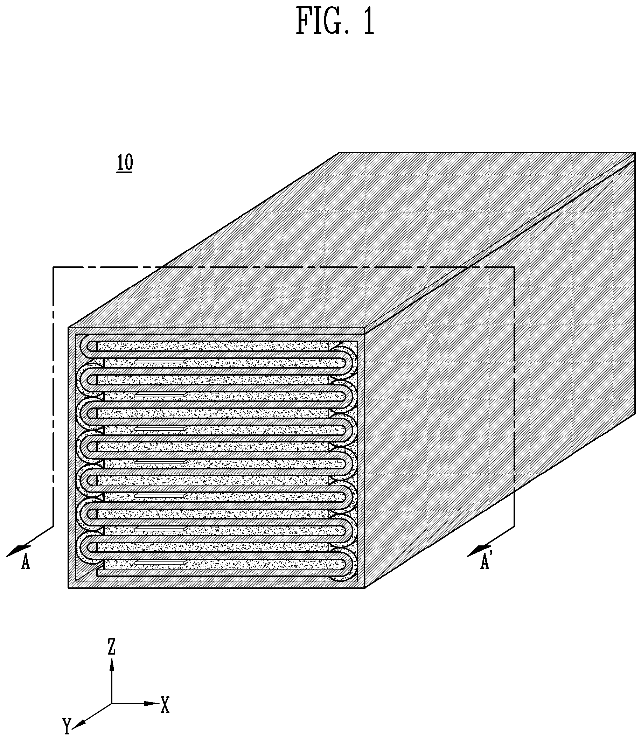

FIG. 1 is a view illustrating an example of an electrode assembly according to an embodiment of the present disclosure.

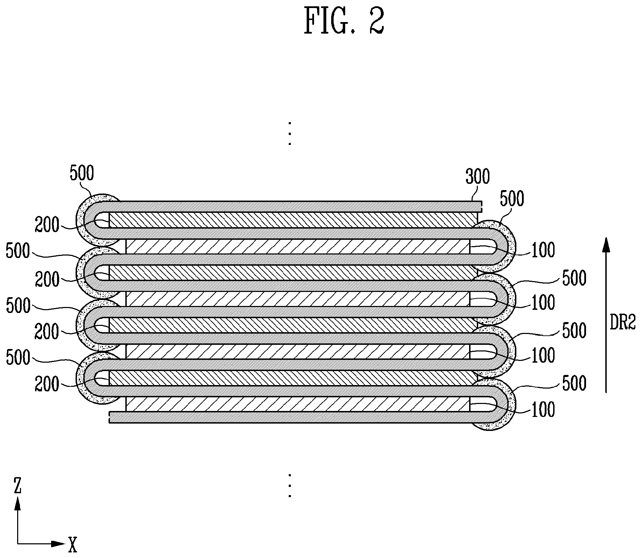

FIG. 2 is a cross-sectional view taken along line A-A' of FIG. 1 as viewed in the Y direction.

Referring to FIGS. 1 and 2 and the accompanying drawings, an electrode assembly 10 for a secondary battery according to an aspect of the present disclosure includes: a positive electrode 100; a negative electrode 200; a separator 300 having a sheet-like shape extending along a first direction DR1 and bent in a zigzag shape; and a second coating line 500 formed on the separator 300, in which a plurality of insertion spaces 50 are formed along a second direction DR2 by the bending of the separator 300, the separator 300 includes a plurality of support portions 320 and a plurality of bending portions 310, and the second coating lines 500 may be formed on at least some of the plurality of bending portions 310.

According to an embodiment, the electrode assembly 10 may include a positive electrode 100, a negative electrode 200, and a separator 300. In this regard, a plurality of positive electrodes 100 and a plurality of negative electrodes 200 may be provided. Meanwhile, the positive electrode 100 and negative electrode 200 may be stacked along the second direction DR2. In this case, the positive electrodes 100 and the negative electrodes 200 stacked along the second direction DR2 may be arranged with the separator 300 interposed therebetween. Such an arrangement may be understood with reference to the configurations shown in FIGS. 1 and 2; however, but the electrode assembly 10 according to the present disclosure is not necessarily limited to this arrangement.

Meanwhile, the shape, size, color, thickness, shading, width, etc. of each component shown in FIGS. 1 and 2 are shown for convenience of description and may be varied as necessary without departing from the scope of the present disclosure, and the scope of the appended claims is not limited thereby. The same applies to the accompanying drawings to be described later.

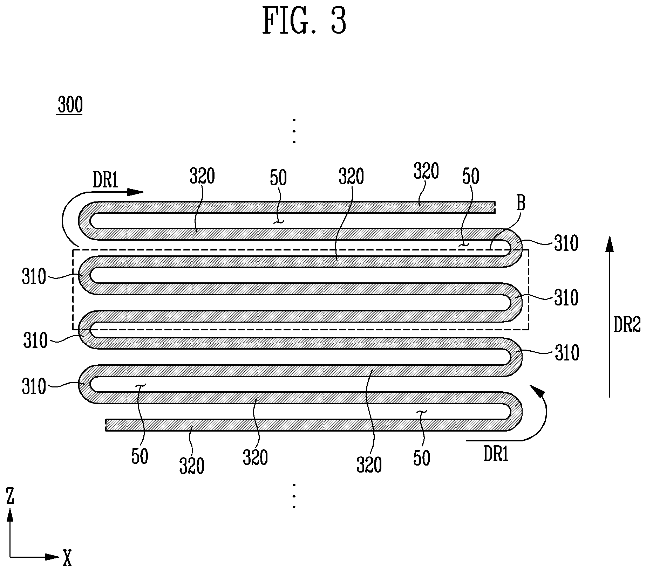

FIG. 3 is a view illustrating an example of a separator according to an embodiment of the present disclosure.

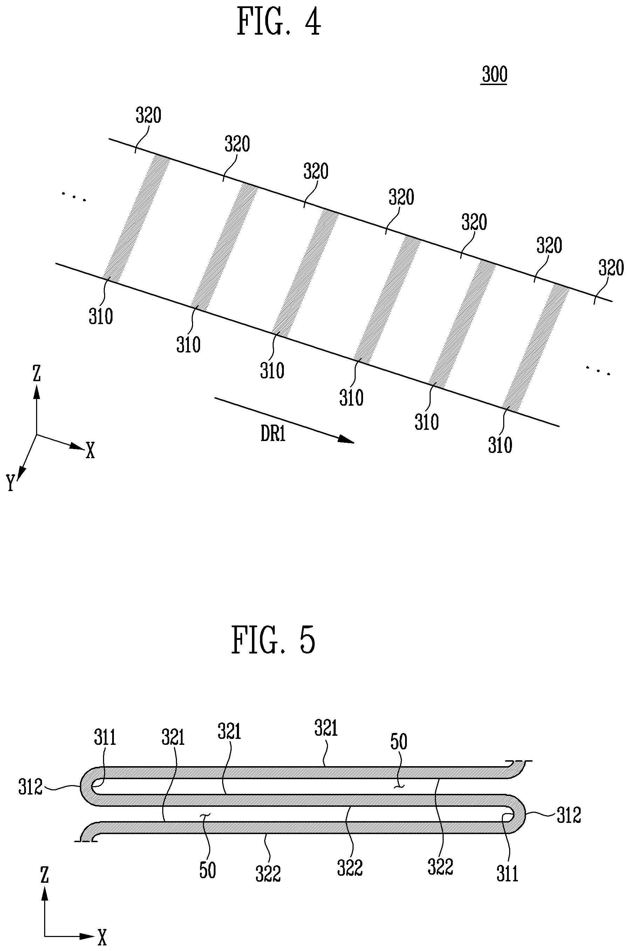

FIG. 4 is a view illustrating an example of the separator of FIG. 3 in an unbent state.

FIG. 5 is an enlarged view of region B in FIG. 3.

According to an embodiment, the separator 300 may be formed of a material that prevents an electrical short-circuit between the positive electrode 100 and the negative electrode 200 and allows ions to flow. According to an embodiment, the separator 300 may have a thickness of 10 µm to 20 µm, but the present disclosure is not limited thereto.

According to an embodiment, the separator 300 may include a porous polymer or a porous nonwoven fabric. The porous polymer may include a polyolefin-based polymer, such as an ethylene polymer, a propylene polymer, an ethylene/butene copolymer, an ethylene/hexene copolymer, and an ethylene/methacrylate copolymer. The porous nonwoven fabric may include high-melting-point glass fibers, polyethylene terephthalate fibers, and the like. The separator 300 may also include a ceramic-based material. For example, inorganic particles may be coated on the polymer or dispersed within the polymer to improve heat resistance.

The separator 300 may have a single- or multi-layered structure including the polymer and/or nonwoven fabric described above.

Referring to FIGS. 2 and 3, the separator 300 in such an embodiment may have a sheet shape extending along the first direction DR1 and may be bent in a zigzag shape.

According to an embodiment, the first direction DR1 may be defined as the direction in which the separator 300 extends, and may be represented as a one-dimensional vector in three-dimensional space, and the direction of the vector is not particularly limited and may follow a straight path or be bent or curved at some points. For example, in the case of the bent form of the separator 300 as shown in FIG. 2, the separator 300 may be bent or curved in a zigzag shape corresponding to the bent form. On the other hand, in the unbent form of the separator 300, as shown in FIG. 3, the separator 300 may be straight.

According to an embodiment, the separator 300 may have a sheet shape extending along the first direction DR1, and may thus have a first side and a second side opposite each other.

Accordingly, the separator 300 may have a pair of long edges extending along the first direction DR1 and two short edges located at the start and end points in the first direction DR1. According to an embodiment, the two short edges may be provided as a pair.

As used herein, the term "zigzag shape" may refer to a shape in which each edge of the end of a portion to be bent is angled, and may also refer to a shape in which at least a portion of the end of the portion to be bent is rounded. In other words, the term "zigzag shape" may refer to a shape that is folded a plurality of times such extension paths are opposite to each other each time it is folded in three-dimensional space, and the end of the folded portion may have an angular shape or at least a portion thereof may have a rounded shape.

According to an embodiment, a plurality of insertion spaces 50 may be formed along the second direction DR2 when the separator 300 is bent in a zigzag shape as described above. Referring to FIGS. 2 and 3, for example, the second direction DR2 may be parallel to the Z direction. In such an embodiment, the second direction DR2 may also have the same meaning as the stacking direction of the positive electrode 100 and the negative electrode 200. In this regard, details will be described later.

Referring to FIGS. 3 and 4, according to an embodiment, the separator 300 may include a plurality of support portions 320 and a plurality of bending portions 310, in which the support portions 320 and the bending portions 310 may be alternately positioned along the first direction DR1.

FIG. 4 is a view illustrating the separator 300 of FIG. 3 in an unbent state. In other words, FIG. 3 is a view illustrating a state in which the separator 300 of FIG. 4 is bent in a zigzag shape.

According to an embodiment, the bending portion 310 may refer to a portion that is bent when the separator 300 is bent into a zigzag shape. With reference to the separator 300 of FIG. 4, the bending portion 310 may refer to a portion that is bent when the separator 300 is bent into a zigzag shape.

According to an embodiment, the support portion 320 may refer to an unbent portion of the separator 300 when the separator 300 is bent into a zigzag shape, and may include a portion located between two adjacent bending portions 310 of the plurality of bending portions 310. At least a portion of the support portion 320 may support the positive electrode 100 or the negative electrode 200, as described above, when placed thereon.

The separator 300 may include a plurality of support portions 320 and bending portions 310. The plurality of support portions 320 and bending portions 310 may be alternately positioned along the first direction DR1, which is the extension direction of the separator 300, as described above.

In the foregoing embodiment, the bending direction of two adjacent bending portions 310 of the plurality of bending portions 310 may be different. In such an embodiment, among the plurality of bending portions 310, two bending portions 310 with one bending portion 310 interposed therebetween may be bent in the same direction.

In the foregoing embodiment, the bending direction of the nth bending portion 310 positioned along the first direction DR1 may be different from the bending direction of the (n+1)th bending portion 310, and may be the same as the bending direction of the (n+2)th bending portion 310. In such an embodiment, the bending directions of the bending portions 310 positioned along the first direction DR1 may be configured to alternate when bending the separator 300.

Referring back to FIGS. 2 and 3, according to an embodiment, the plurality of insertion spaces 50 may be formed along the second direction DR2 by bending the separator 300.

As described above, the positive electrodes 100 and the negative electrodes 200 may be inserted into the plurality of insertion spaces 50, along the second direction DR2. Meanwhile, the positive electrodes 100 and the negative electrodes 200 may be inserted into the plurality of insertion spaces 50 alternately along the second direction DR2. In this embodiment, the electrode assembly 10 may be configured such that at least a portion of the separator 300 is interposed between the positive electrode 100 and the negative electrode 200.

According to an embodiment, each of the plurality of insertion spaces 50 may be spatially defined by two adjacent support portions 320 and a bending portion 310 located between the two support portions 320. In such an embodiment, each of the plurality of insertion spaces 50 may have two sides opposite each other that are physically separated from an external space by the two support portions 320, and one side (including a curved side) between the two opposite sides that is physically separated from the external space by a bending portion 310 located between the two support portions 320, and a remaining portion that communicates with the outside. The remaining portion that is in communication with the outside may communicate at an imaginary boundary connecting each end of the two support portions 320. That is, the inner side of the imaginary boundary may be defined as an insertion space 50.

In such an embodiment of the insertion space 50, the portion interposed between the positive electrode 100 and the negative electrode 200 alternately inserted along the second direction DR2 may be at least a portion of the support portion 320.

Referring to FIG. 5, according to an embodiment, each of the plurality of bending portions 310 may include an inner surface 311 surrounding one of the plurality of insertion spaces 50 and an outer surface 312 opposite the inner surface 311.

As mentioned above, the separator 300 may have a first side and a second side that are opposite each other. In such an embodiment, the inner surface 311 and the outer surface 312 may be either one of the first side and the second side.

As mentioned above, the plurality of bending portions 310 may be provided. In such an embodiment, each of the plurality of bending portions 310 may include the inner surface 311 and the outer surface 312. The inner surface 311 and outer surface 312 of each of the plurality of bending portions 310 may independently be either one of the first side and the second side.

As described above, the bending portions 310 may refer to bent portions of the separator 300. Accordingly, the areas of the inner surface 311 and the outer surface 312 at the bending portion 310 may be different. In a specific embodiment, the area of the outer surface 312 may be larger than the area of the inner surface 311. In such an embodiment, the outer surface 312 may be defined as a larger one of the two sides of the bent portion 310, and the inner surface 311 may be defined as a smaller one of the two sides of the bent portion 310.

As the separator 300 is bent in a zigzag shape, the inner surface 311 and outer surface 312, defined as above, may be different for each bending portion 310 when viewed from the first side and the second side of the separator 300. For example, when the inner surface 311 of the nth bending portion 310 positioned along the first direction DR1 is the first side of the separator 300 and the outer surface 312 thereof is the second side of the separator 300, the inner surface 311 of the (n+1)th bending portion 310 may be the second side of the separator 300 and the outer surface 312 thereof may be the first side of the separator 300.

Referring back to FIG. 5, according to an embodiment, each of the plurality of support portions 320 may include a support surface 321 that supports the positive electrode 100 or the negative electrode 200 along the second direction DR2, and a cover surface 322 opposite the support surface 321.

According to an embodiment, the support surface 321 may be connected to the inner surface 311 of the bending portion 310 positioned distally with respect to the start point of the first direction DR1 between two bending portions adjacent to the support portion 320, and to the outer surface 312 of the bending portion 310 positioned proximally with respect to the start point of the first direction DR1 between the two bending portions 310, and the cover surface 322 may be opposite the support surface 321.

In such an embodiment, the cover surface 322 may be connected to the outer surface 312 of the bending portion 310 positioned distally with respect to the start point of the first direction DR1 between two bending portions adjacent to the support portion 320, and to the inner surface 311 of the bending portion 310 positioned proximally with respect to the start point of the first direction DR1 between the two bending portions 310.

That is, in any one of the plurality of support portions 320, when two bending portions 310 adjacent to the support portion 320 are the nth bending portion 310 and the (n+1)th bending portion 310 positioned along the first direction DR1, respectively, the support surface 321 of the support portion 320 may be connected to the inner surface 311 of the (n+1)th bending portion 310 and the outer surface 312 of the nth bending portion 310, and the cover surface 322 of the support portion 320 may be connected to the outer surface 312 of the (n+1)th bending portion 310 and the inner surface 311 of the nth bending portion 310.

As will be described later, according to an embodiment, the electrode assembly 10 may be configured such that either the positive electrode 100 or the negative electrode 200 is supported by being disposed on the support surface 321 of the support portion 320. However, the cover surface 322 may also be in contact with either the positive electrode 100 or the negative electrode 200. The foregoing support refers to support in the second direction DR2, and, with reference to FIGS. 1 to 4, may mean support in the +Z direction, for example, against a gravitational force exerted in the -Z direction.

According to an embodiment, the separator 300 may further include an outer end portion in addition to the plurality of support portions 320 and the bending portions 310. The outer end portion may be formed at the end of the separator 300 in the first direction DR1, and may be at least partially curved or bent as required.

At the outer end portion, the positive electrode 100 or the negative electrode 200 may not be supported, or may be in contact with the positive electrode 100 or the negative electrode 200 only on at least one surface thereof.

According to an embodiment, the outer end portion may be adjacent to the bending portion 310 positioned at the most distal end in the first direction DR1.

According to an embodiment, the outer end portion may bent or curved to surround at least a portion of the outer surface of the electrode assembly 10.

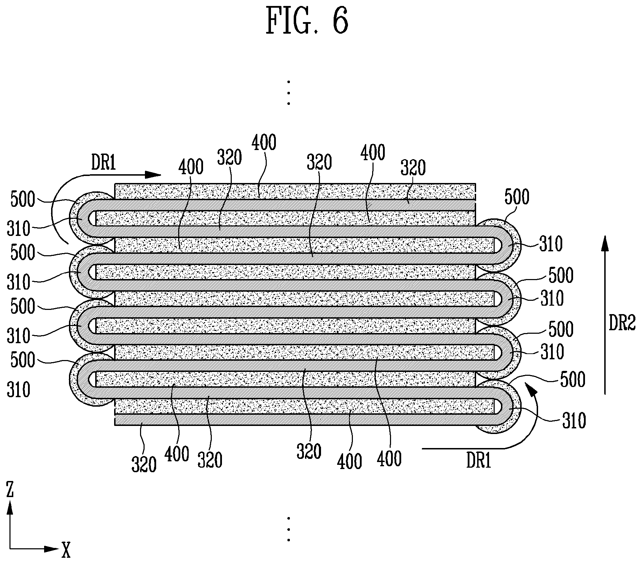

FIG. 6 is a view illustrating an example in which a first coating line and a second coating line are formed on the separator of FIG. 3.

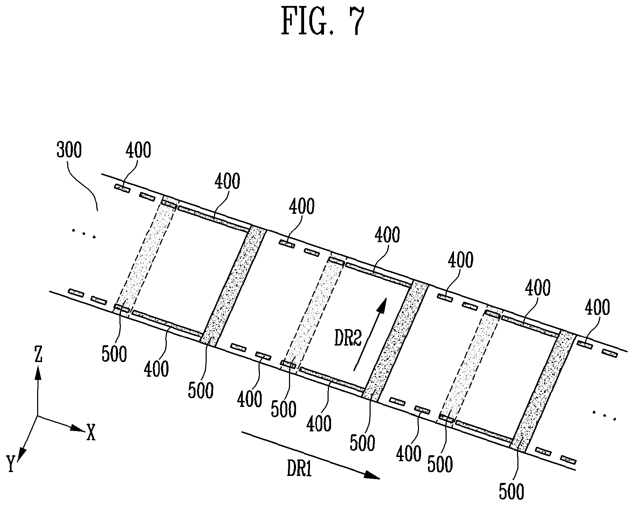

FIG. 7 is a view illustrating an example of the separator of FIG. 6 in an unbent state

Referring to FIGS. 1 and 6, according to an embodiment, the electrode assembly 10 for a secondary battery further includes a first coating line 400 formed on the separator 300, in which the first coating line 400 and the second coating line 500 intersect each other in their extending directions, and the first coating lines 400 may be formed on at least some of the plurality of support members 320.

Referring to FIG. 6, according to an embodiment, the first coating line 400 and the second coating line 500 may be formed on the separator 300. The first coating line 400 and the second coating line 500 may extend in directions different from each other.

According to an embodiment, the first coating line 400 and the second coating line 500 may refer to coating portions formed in a line shape. In such an embodiment, the first coating line 400 and the second coating line 500 may each independently have a length and a width. The term "extending direction" may refer to a direction in which the lengths of the first coating line 400 and the second coating line 500 extends.

Referring to FIGS. 1 to 6, the second coating line 500 is shown as having a width greater than that of the first coating line 400, but the present disclosure is not limited thereto, and the first coating line 400 and the second coating line 500 may be formed having various widths as necessary.

According to an embodiment, the first coating line 400 may be formed on each of the plurality of support portions 320, and the second coating line 500 may be formed on each of the plurality of bending portions 310.

According to an embodiment, the first coating line 400 and the second coating line 500 may be formed on the separator 300 to prevent lithium ions from being deposited on the outer end portions of the positive electrodes 100 and/or negative electrode 200 inserted in the plurality of insertion spaces 50 during charging and discharging of the electrode assembly 10 according to an aspect of the present disclosure or to avoid non-uniform deposition of lithium ions, thereby preventing dendrites from being formed and grown on the outer end portions of the electrodes.

According to an embodiment, at least one of the first coating line 400 and the second coating line 500 may have insulating properties.

According to an embodiment, the first coating line 400 may have insulating properties.

According to an embodiment, the second coating line 500 may have insulating properties.

According to an embodiment, at least one of the first coating line 400 and the second coating line 500 may have an electrolyte swelling degree in an electrolytic solution of 20% or less.

According to an embodiment, the first coating line 400 may have an electrolyte swelling degree in an electrolytic solution of 20% or less.

According to an embodiment, the second coating line 500 may have an electrolyte swelling degree in an electrolytic solution of 20% or less.

According to an embodiment, the electrolyte swelling ratio may satisfy a relationship defined by [Equation 1] below. [Equation 1] $ER \left(%\right) = \left[\left({T}_{T}-{T}_{0}\right)/{T}_{0}\right] \times 100$

In Equation 1, ER is an electrolyte swelling degree in an electrolytic solution, T_{T} is a thickness measured after each coating line specimen (the size of which is not particularly limited) is immersed in an electrolyte for 30 seconds or more, and T₀ is an initial thickness measured before each coating line specimen is immersed in the electrolyte.

In specific embodiments, the electrolyte swelling ratio may be 17% or less, 15% or less, 12% or less, 10% or less, 7% or less, 5% or less, 3% or less, 2% or less, or 1% or less.

According to an embodiment, at least one of the first coating line 400 and the second coating line 500 may have adhesiveness.

According to an embodiment, the first coating line 400 may have adhesiveness.

According to an embodiment, the second coating line 500 may have adhesiveness.

According to an embodiment, both the first coating line 400 and the second coating line 500 may have insulating properties.

According to an embodiment, both the first coating line 400 and the second coating line 500 may have an electrolyte swelling degree in an electrolytic solution of 20% or less.

According to an embodiment, both the first coating line 400 and the second coating line 500 may have adhesiveness.

According to an embodiment, the first coating line 400 may include at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

According to an embodiment, the second coating line 500 may include at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

According to an embodiment, the first coating line 400 and the second coating line 500 may be configured to include the same material. In a specific embodiment, the first coating line 400 and the second coating line 500 may be composed of the same material, but the present disclosure is not limited thereto.

Referring back to FIG. 6, according to an embodiment, the first coating lines 400 may be formed on at least some of the plurality of support portions 320.

According to an embodiment, the first coating line 400 may extend in a direction parallel to the first direction DR1. The direction parallel to the first direction DR1 may include both the + first direction +DR1 and the - first direction -DR1.

Referring back to FIG. 7, according to an embodiment, the first coating line 400 may be formed as a pair spaced apart in a third direction DR3 intersecting the first direction DR1. In a specific embodiment, the third direction DR3 may refer to a direction that is substantially perpendicular to the first direction DR1.

As described above, the separator 300 may have a sheet shape extending along the first direction DR1 and may have a pair of long edges extending along the first direction DR1.

In this case, a direction connecting the pair of long edges in a straight line may be defined as the third direction DR3. In other words, the third direction DR3 may also be defined as the width direction of the separator 300. Referring to FIGS. 1 to 6, for example, the third direction DR3 may refer to a direction parallel to the Y-direction.

In such an embodiment, the first coating lines 400 formed in pairs may each be formed adjacent to one of the long edges. In an exemplary embodiment, at least one of the pair of first coating lines 400 may be formed in a region that includes the long edge. Alternatively, in an exemplary embodiment, at least one of the pair of first coating lines 400 may be formed in a region spaced apart from the long edge.

That is, referring to FIG. 7, according to an exemplary embodiment, the first coating lines 400 may extend in a direction parallel to the first direction DR1, and may be formed as a pair spaced apart in the third direction DR3 intersecting the first direction DR1.

Referring back to FIGS. 5 to 7, according to an embodiment, the first coating line 400 may be formed on the support surface 321 of each of the plurality of support members 320. That is, in such an embodiment, each of the plurality of support portions 320 may include the support surface 321 supporting the positive electrode 100 or the negative electrode 200 along the second direction DR2 and a cover surface 322 opposite the support surface 321, and the first coating line 400 may be formed on the support surface 321.

In such an embodiment, the first coating line 400 may be formed on different sides of the separator 300 at two adjacent support portions 320. For example, if the first coating line 400 formed on the support portion 320 at the nth position along the first direction DR1 is formed on one side of the separator 300, then the first coating line 400 formed on the support portion 320 at the (n+1)th position along the first direction DR1 may be formed on the other side of the separator 300.

In such an embodiment, each of the first coating lines 400 formed on the two adjacent support portions 320 may be discontinuous with each other. For example, the first coating line 400 formed on the support portion 320 at the nth position along the first direction DR1 and the first coating line 400 formed on the support portion 320 at the (n+1)th position along the first direction DR1 may be discontinuous with each other.

According to an embodiment, the first coating line 400 may be formed only on the support surface 321 of each of the plurality of support portions 320. Alternatively, the first coating line 400 may be formed only on the support surface 321 on each of the plurality of support portions 320, but may also be in contact with the adjacent cover surface 322 with the insertion space 50 interposed therebetween. In such an embodiment, the first coating line 400 may physically separate at least a portion of the insertion space 50 from the outside at a long-edge side of the separator 300. For example, as shown in FIGS. 3 and 6, the first coating line 400 may physically separate at least a portion of the insertion space 50 from the outside in the +Y or -Y direction.

Referring back to FIGS. 2, 3, and 6, according to an embodiment, the second coating line 500 may be formed on each of the plurality of bending portions 310.

According to an embodiment, the second coating line 500 may be formed on the outer surface 312 of each of the plurality of bending portions 310. That is, in such an embodiment, each of the plurality of bending portions 310 may include the inner surface 311 surrounding one of the plurality of insertion spaces 50 and the outer surface 312 opposite the inner surface 311, and the second coating line 500 may be formed on the outer surface 312.

According to an embodiment, the second coating line 500 may be formed to cover the entire outer surface 312 of the bending portion 310. Alternatively, according to an embodiment, the second coating line 500 may be formed to cover at least a portion of the outer surface 312 of the bending portion 310.

In such an embodiment, the second coating line 500 may be formed on different sides of the separator 300 at two adjacent bending portions 310 relative to the first direction DR1. For example, when the second coating line 500 formed on the nth bending portion 310 along the first direction (DR1) is formed on the first side of the separator 300, the second coating line formed on the (n+1)th bending portion 310 along the first direction (DR1) may be formed on the second side of the separator 300.

In such an embodiment, the second coating line 500 may be formed on the same side of the separator 300 at two adjacent bending portions 310 along the second direction DR2. Referring to FIG. 6, the bending portions 310 in the electrode assembly 10 may be divided into two sets, a first set located in the -X direction and a second set located in the +X direction. In such an embodiment, each set of bending portions 310 may be arranged along the second direction DR2. For example, when the second coating line 500 formed on the set of bending portions 310 in the -X direction is formed on the first side of the separator 300, the second coating line 500 formed on the set of bending portions 310 in the +X direction may be formed on the second side of the separator 300.

Alternatively, when the second coating line 500 formed on the nth bending portion 310 along the first direction DR1 is formed on the first side of the separator 300, the second coating line 500 formed on the (n+2)th bending portion 310 along the first direction DR1 may also be formed on the first side of the separator 300.

Referring to FIG. 7, according to an embodiment, the second coating line 500 may extend in a direction parallel to a third direction DR3 intersecting the first direction DR1. In a particular embodiment, the third direction DR3 may refer to a direction that is substantially perpendicular to the first direction DR1. The direction parallel to the third direction DR3 may include both a +third direction +DR3 and a -third direction -DR3.

Referring back to FIGS. 2 and 6, according to an embodiment, adjacent second coating lines 500 along the second direction DR2 may be in contact with each other.

In such an embodiment, the second coating lines 500 may also physically separate at least a portion of the insertion space 50 from the outside in a direction facing the inner surface 311. That is, as shown in FIG. 6, for example, the second coating lines 500 may physically separate at least a portion of the insertion space 50 from the outside in the +X direction or the - X direction. In a particular embodiment, the second coating lines 500 may physically separate the insertion space 50 from the outside in a direction facing the inner surface 311.

In the embodiment described above, the second coating lines 500 formed in the first set of bending portions 310 positioned in the -X direction may physically separate at least some of the plurality of insertion spaces 50 from the outside in the -X direction. Meanwhile, the second coating line 500 formed in the first set of bending portions 310 located in the +X direction may physically separate at least some of the plurality of insertion spaces 50 from the outside in the +X direction.

As described above, at least one of the first coating line 400 and the second coating line 500 may be insulating, have an electrolyte swelling degree in an electrolytic solution of 20% or less, or be adhesive. In a specific embodiment, both the first coating line 400 and the second coating line 500 may be insulating and adhesive, and may also have an electrolyte swelling degree in an electrolytic solution of 20% or less. In such an embodiment, the insertion space 50 may be separated from the outside in the +X direction or the -X direction by the second coating lines 500, and the second coating lines 500 may be bonded to each other by being in contact with each other at the same time, thereby further promoting the structural stability of the electrode assembly 10.

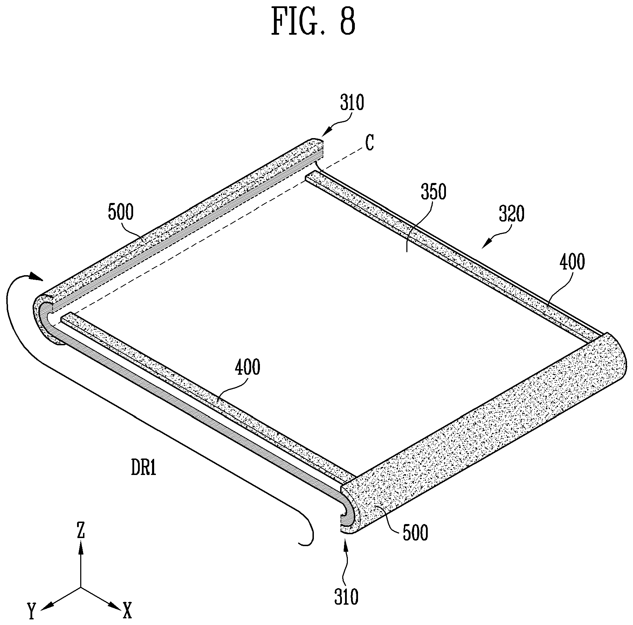

FIG. 8 is a view illustrating an example of a positional relationship between a support portion and a bending portion in the separator of FIG. 6.

Referring to FIG. 8, according to an embodiment, the second coating line 500 may contact any one of the first coating lines 400 that are adjacent along the first direction DR1.

According to an embodiment, the bending portions 310 and support portions 320 may be alternately formed along the first direction DR1, in which the first coating line 400 formed on each of the plurality of support portions 320 may be formed on the support surface 321 of the support portions 320, and the second coating line 500 formed on each of the plurality of bending portions 310 may be formed on the outer surface 312 of the bending portions 310, as described above.

In such an embodiment, the second coating line 500 formed on the bending portion 310 may contact the first coating line 400 formed on one of the support portions 320 adjacent to the bending portion 310 along the first direction DR1.

In a specific embodiment, the second coating line 500 formed on each of the plurality of bending portions 310 may contact the first coating line 400 formed on the support portion 320 that is distally adjacent with respect to the start point in the first direction DR1 at each of the bending portions 310.

As described above, the support surface 321 may be connected to the outer surface 312 of the bending portion 310, which is proximally positioned with respect to the start point in the first direction DR1, between the two bending portions 310 adjacent to the support portion 320. Accordingly, the first coating line 400 formed on the support surface 321 and the second coating line 500 formed on the outer surface 312 may be formed on the same side relative to the separator 300. In such an embodiment, the first coating line 400 and the second coating line 500 formed on the same side relative to the separator 300 as described above may be in contact with each other.

Furthermore, as described above with reference to FIG. 7, the first coating line 400 may extend in a direction parallel to the first direction DR1 from each of the plurality of support portions 320, in which the first coating line 400 may be formed in pairs spaced apart in a third direction DR3 intersecting the first direction DR1.

In such an embodiment, the second coating line 500 formed on each of the plurality of bending portions 310 may be in contact with both of a pair of adjacent first coating lines 400 along the first direction DR1.

However, as mentioned above, the separator 300 may further include the outer end portion at the end thereof in the first direction DR1, in which case the second coating line 500 formed at the bending portion 310 positioned at the end thereof along the first direction DR1, i.e. adjacent to the outer end portion, may not be in contact with the first coating lines 400 adjacent along the first direction DR1.

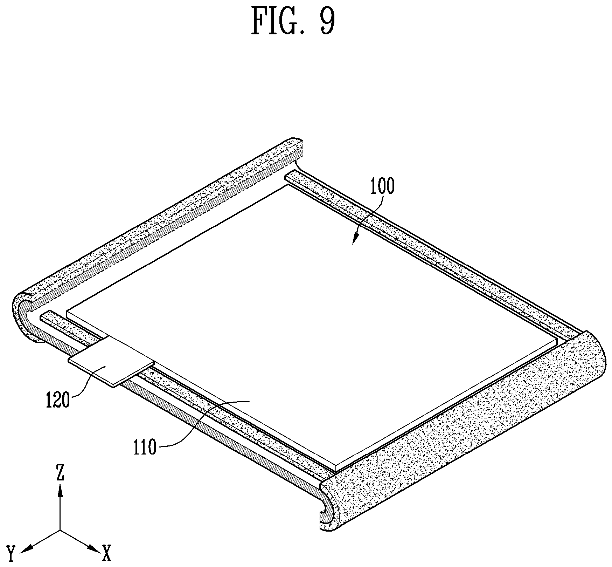

FIG. 9 is a view illustrating an example in which a positive electrode is disposed in an electrode arrangement portion of FIG. 8

Referring to FIG. 9, according to an embodiment, by the first coating line 400 and the second coating line 500 being in contact with each other, an electrode placement portion 350 may be formed at each of the plurality of support portions 320, and the positive electrode 100 may be disposed in the electrode placement portion 350.

As in the aforementioned embodiment, the second coating line 500 formed on each of the plurality of bending portions 310 may be in contact with one of the first coating lines 400 adjacent along the first direction DR1. As in the aforementioned embodiment, the second coating line 500 formed on each of the plurality of bending portions 310 may be in contact with both of a pair of adjacent first coating lines 400 along the first direction DR1. In such an embodiment, by the first coating lines 400 and second coating lines 500 being in contact with each other, a region may be formed at each of the plurality of support portions 320 that is enclosed along at least two edges, specifically three edges, by the first coating lines 400 and second coating lines 500. The electrode placement portion 350 may be defined as the enclosed region.

According to an embodiment, the electrode placement portion 350 may be formed on the support surface 321 of the support portion 320, i.e., the electrode placement portion 350 may be defined as the enclosed area as described above on a support surface 321 of each of the plurality of support portions 320.

According to an embodiment, the positive electrode 100 may be disposed in the electrode placement portion 350. In such an embodiment, the positive electrode 100 may be surrounded, at least two edges, specifically three edges, by the first coating line 400 and second coating line 500 that are in contact with each other.

In an exemplary embodiment, the positive electrode 100 disposed in the electrode placement portion 350 may be disposed in a shape that substantially fits the shape of the electrode placement portion 350. That is, the positive electrode 100 disposed in the electrode placement portion 350 may be disposed in such a manner that it is spaced apart from both of an adjacent pair of first coating lines 400 and second coating lines 500 by a small amount. In other words, three edges of the positive electrode 100 disposed in the electrode placement portion 350 that are adjacent to the first coating line 400 and the second coating line 500 may be disposed so as to be spaced apart from the adjacent first coating line 400 or the adjacent second coating line 500 by a small distance, and may be surrounded by the first coating line 400 and the second coating line 500.

On the other hand, as will be described later, the area of the negative electrode 200 may be larger than the area of the positive electrode 100.

According to the embodiment described above with reference to FIG. 9, the negative electrode 200 may not be disposed in the electrode placement portion 350 when the negative electrode 200 is inserted into the insertion space 50 and supported by the support portion 320.

In such an embodiment, the negative electrode 200 inserted into the insertion space 50 may not be surrounded by the first coating line 400 and the second coating line 500, unlike the arrangement of the positive electrode 100 described above. In an exemplary embodiment, the negative electrode 200 may be in contact with at least a portion of the first coating line 400 and the second coating line 500 in the second direction DR2, and may thus be inserted into the insertion space 50 in such a manner that it is supported in the second direction DR2 by at least a portion of the first coating line 400 and the second coating line 500, for example, by both the first coating line 400 and the second coating line 500.

By disposing the positive electrode 100 or the negative electrode 200 in the above manner with at least a portion of the separator 300 therebetween, i.e., by inserting the positive electrode 100 or the negative electrode 200 into the insertion space 50 as described above, lithium ions are prevented from deposition on the outer end portion of the electrode during charging and discharging of the secondary battery including the electrode assembly 10, or prevented from the non-uniform deposition, thereby effectively preventing dendrites from being formation on the outer end portion of the electrode. In particular, as will be described later, even though a lithium metal negative electrode is employed as the negative electrode 200, lithium ions are prevented from deposition on the outer end portion of the electrode, or prevented from the non-uniform deposition, thereby effectively preventing dendrites from being formation on the outer end portion of the electrode.

Referring back to FIGS. 1 and 2, the positive electrode 100 and negative electrode 200 may be alternately disposed along the second direction DR2 in a plurality of insertion spaces 50 formed along the second direction DR2 by the separator 300 configured as described above.

According to an embodiment, the positive electrode 100 may include a positive electrode collector and a positive electrode active material. The positive electrode collector may include a known conductive material as long as it does not cause a chemical reaction within the lithium secondary battery. The positive electrode collector may include, for example, any one of stainless steel, nickel (Ni), aluminum (Al), titanium (Ti), copper (Cu), and alloys thereof, and may be provided in various forms, such as a film, a sheet, or a foil. The positive electrode active material may include a material into which lithium ions can be inserted and removed. The positive electrode active material may be, for example, a lithium metal oxide.

According to exemplary embodiments, the positive electrode active material may include a lithium-transition metal complex oxide. In a specific example, the positive electrode active material may include a lithium-nickel metal complex oxide. The lithium-nickel metal complex oxide may further include at least one of cobalt (Co), manganese (Mn), and aluminum (Al).

In some embodiments, the positive electrode active material or the lithium-nickel metal complex oxide may include a layered structure or a crystal structure represented by Formula 1 below.

[Formula 1] LiₓNiₐM_{b}O_{2+z}

In Formula 1, 0.9≤x≤1.2, 0.6≤a≤0.99, 0.01≤b≤0.4, and -0.5≤z≤0.1. As described above, M may include Co, Mn, and/or Al.

The structure represented by Formula 1 represents the bonding relationships contained within the layered or crystal structure of the positive electrode active material and is not intended to exclude additional elements. For example, M may include Co and/or Mn. Co and/or Mn may be provided as the main active element of the positive electrode active material together with Ni. Formula 1 is provided to express the bonding relationships of the main active element and should be understood to encompass the introduction and substitution of additional elements.

In an exemplary embodiment, the positive electrode active material or the lithium-nickel metal complex oxide may include a layered structure or a crystal structure represented by Formula 1-1 below.

[Formula 1-1] LiₓNiₐM1_{b1}M2_{b2} O_{2+z}

In Formula 1-1, M1 may include Co, Mn, and/or Al. M2 may include auxiliary elements described above. In Formula 1-1, 0.9≤x≤1.2, 0.6≤a≤0.99, 0.01≤b1+b2≤0.4,and -0.5≤z≤0.1.

According to an embodiment, the positive electrode active material may include a lithium metal oxide. Specifically, the positive electrode active material may include a lithium-nickel metal complex oxide as described above, a lithium iron phosphate (LFP)-based oxide represented by the formula of LiFePO₄, or a lithium cobalt (LCO)-based oxide represented by the formula of LiCoO₂.

According to an exemplary embodiment, the negative electrode may include a negative electrode collector and a negative electrode active material. The negative electrode may include a negative electrode collector and a negative electrode active material applied to at least one surface of the negative electrode collector. The negative electrode collector may include a conductive material as long as it does not cause a chemical reaction within the lithium secondary battery. The negative electrode collector may include, for example, any one of stainless steel, nickel (Ni), aluminum (Al), titanium (Ti), copper (Cu), and alloys thereof, and may be provided in various forms, such as a film, a sheet, or a foil.

The negative electrode active material may include, for example, any one of lithium alloys, lithium metal, lithium-containing composites, or combinations thereof.

According to an embodiment, the negative electrode 200 may include a lithium metal negative electrode. That is, in an exemplary embodiment, the negative electrode 200 may include a negative electrode active material including lithium metal, a lithium alloy, and/or a lithium-containing composite.

The lithium metal may be pure lithium metal or lithium metal with a protective layer formed thereon for inhibiting dendrite growth. According to an embodiment, a lithium metal-containing layer deposited or coated on the negative electrode collector may be used as the negative electrode active material. According to an embodiment, a lithium thin film layer may be used as the negative electrode active material.

Referring to FIG. 9, according to an embodiment, the positive electrode 100 may include a positive electrode coated portion 110 having a positive electrode active material layer formed on the positive electrode collector and a positive electrode uncoated portion 120 formed outside the positive electrode coated portion 110. Referring to FIG. 9, the positive electrode uncoated portion 120 may refer to a region where at least two sides of the positive electrode collector are exposed to the outside because, unlike the positive electrode coated portion 110, no positive electrode active material layer is formed on the positive electrode collector. However, the shape and formation position of the positive electrode uncoated portion 120 are not limited to those shown in FIG. 9.

According to an embodiment, the area of the positive electrode coated portion 110 may be smaller than the area of the electrode placement portion 350. In such an embodiment, the area of the electrode placement portion 350 may be less than or equal to 1.2 times the area of the positive electrode coated portion 110.

In other words, according to an embodiment, the positive electrode 100 may include the positive electrode coated portion 110 having the positive electrode active material layer formed on the positive electrode collector, and the positive electrode uncoated portion 120 formed on the outer side of the positive electrode coated portion 110, and may satisfy the following Equation 1. [Equation 1] $1 < As / Ac \leq 1.2$

In Equation 1, As is the area of the electrode placement portion 350, and Ac is the area of the positive electrode coated portion 110.

Referring to FIG. 8, As may be defined as the area of a quadrilateral region on the support surface 321, which has the pair of first coating lines 400 and the second coating line 500 as three edges, and has an imaginary boundary C connecting the ends of the pair of first coating lines 400 as one edge.

According to an embodiment, the negative electrode 200 may include a negative electrode coated portion (not shown) having a negative electrode active material layer formed on the negative electrode collector and a negative electrode uncoated portion (not shown) formed outside the negative electrode coated portion (not shown). The negative electrode uncoated portion (not shown) may refer to a region where, unlike the negative electrode coated portion (not shown), no negative electrode active material layer is formed on the negative electrode collector, such that at least two sides of the negative electrode collector are exposed to the outside.

Referring now to FIG. 2, according to an embodiment, the area of the negative electrode 200 may be larger than the area of the positive electrode 100. In an exemplary embodiment, the area of the negative electrode coated portion (not shown) may be larger than the area of the positive electrode coated portion 110.

In an exemplary embodiment, the following Equation 2 may be further satisfied. [Equation 2] $Ac < As \leq Aa$

In the above equation 2, As and Ac are as defined in Equation 1, and Aa is the area of the negative electrode coated portion (not shown).

Referring to FIGS. 1 and 2, the positive electrode 100 and the negative electrode 200 may be inserted in different directions in which the uncoated portions protrude, but are not limited thereto. When the protruding directions of the uncoated portions of the positive electrode 100 and the negative electrode 200 are different, the positive electrode 100 and the negative electrode 200 may be inserted such that the uncoated portions of the positive electrode 100 and negative electrode 200 protrude from the same side but are positioned differently, or the uncoated portions of the positive electrode 100 and the negative electrode 200 may be inserted such that the positive electrode 100 and negative electrode 200 protrude from the opposite sides.

According to an embodiment, the electrode assembly 10 may further include a positive electrode lead electrically coupled to at least one of the uncoated portions of the positive electrode 100, and a negative electrode lead electrically connected to at least one of the uncoated portions of the negative electrode 200. The positive electrode lead may be welded to at least one of the uncoated portions of the positive electrode 100, and may extend in the same direction as the protruding direction of the uncoated portion of the positive electrode 100. Meanwhile, the negative electrode lead may be welded to at least one of the uncoated portions of the negative electrode 200, and may extend in the same direction as the protruding direction of the uncoated portion of the negative electrode 200.

According to an embodiment, the electrode assembly 10 may include 2 to 60 positive electrodes 100, and 2 to 60 negative electrodes 200. In such an embodiment, the electrode assembly 10 may include 4 to 120 insertion spaces 50, but is not necessarily limited thereto.

A secondary battery according to an aspect of the present disclosure may include the electrode assembly 10 according to an aspect of the present disclosure.

In a specific embodiment, the secondary battery may include: the electrode assembly 10 according to one aspect of the present disclosure; an exterior member accommodating the electrode assembly 10; and an electrolyte accommodated together with the electrode assembly 10 within the exterior member.

According to an embodiment, the exterior member may include an accommodating space therein, and may be configured to isolate objects accommodated in the accommodating space from the outside. The electrode assembly 10 may be accommodated and sealed in the accommodating space of the exterior member.

The exterior member may be selected from a pouch-type exterior member, a can-type exterior member, or a coin-type exterior member, or the like, as appropriate.

According to an embodiment, the electrolyte may be accommodated together with the electrode assembly 10 within the exterior member. Specifically, the electrolyte may be accommodated together with the electrode assembly 10 within the accommodating space of the exterior member, and may be in contact with at least a portion of the electrode assembly 10 within the accommodating space.

According to an embodiment, the electrolyte may provide a pathway for migration of ions.

According to exemplary embodiments, a non-aqueous electrolyte solution may be used as the electrolyte.

The non-aqueous electrolyte may include a lithium salt and an organic solvent. The lithium salt may be represented, for example, by Li⁺X⁻, and examples of the anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, (CF₃SO₂)₂N⁻, (FSO₂)₂N⁻, CF₃CF₂(CF₃)₂O⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The organic solvent may include an organic compound that has sufficient solubility for the lithium salt and additives and does not have reactivity within the battery. The organic solvent may include, for example, at least one selected from the group consisting of a carbonate-based solvent, an ester-based solvent, an ether-based solvent, a ketone-based solvent, an alcohol-based solvent, and an aprotic solvent.

The non-aqueous electrolyte may further include an additive. The additive may include, for example, a cyclic carbonate-based compound, a fluorine-substituted carbonate-based compound, a sultone-based compound, a cyclic sulfate-based compound, a cyclic sulfite-based compound, a phosphate-based compound, and a borate-based compound.

Electrode assemblies prepared in accordance with one aspect of the present disclosure may be preferably used in battery cells used to power small devices, as well as in battery modules and/or unit cells of battery packs in medium to large devices including multiple battery cells. Examples of such small devices include, but are not limited to, cell phones, notebook computers, cameras, and the like, and examples of such medium to large devices include, but are not limited to, electric vehicles, hybrid electric vehicles, plug-in hybrid electric vehicles, energy storage systems, and the like.

It is understood by those skilled in the art that the plurality of exemplary embodiments described above are specific examples of the following aspects.

Aspect 1: An electrode assembly for a secondary battery, comprising: a positive electrode; a negative electrode; a separator shaped like a sheet extending along a first direction and bent in a zigzag shape; and a second coating line formed on the separator, wherein the bending of the separator causes a plurality of insertion spaces to be formed along a second direction, the separator comprises a plurality of support portions and a plurality of bending portions, and the second coating lines are formed in at least a portion of the plurality of bending portions.

Aspect 2: The electrode assembly of Aspect 1, wherein (a) the second coating line has insulating properties, and/or (b) the second coating line has an electrolyte swelling degree of 20% or less, and/or (c) the second coating line has an adhesiveness.

Aspect 3: The electrode assembly of Aspect 1 or 2, wherein the second coating line comprises at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

Aspect 4: The electrode assembly of any one of Aspects 1 to 3, further comprising a first coating line formed on the separator, wherein the first coating line and the second coating line extend in directions intersecting each other, and the first coating lines are formed on at least a portion of the plurality of support portions.

Aspect 5: The electrode assembly of any one of Aspects 1 to 4, wherein (a) the first coating line has insulating properties, and/or (b) the first coating line has an electrolyte swelling degree of 20% or less, and/or (c) the first coating line has an adhesiveness.

Aspect 6: The electrode assembly of any one of Aspects 1 to 5, wherein the first coating line comprises at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

Aspect 7: The electrode assembly of any one of Aspects 1 to 6, wherein the first coating line extends in a direction parallel to the first direction, and is formed as a pair spaced apart in a third direction intersecting the first direction.

Aspect 8: The electrode assembly of any one of Aspects 1 to 7, wherein, each of the plurality of support portions comprises a support surface supporting the positive or negative electrode along the second direction, and a cover surface opposite the support surface, and the first coating line is formed on the support surface.

Aspect 9: The electrode assembly of any one of Aspects 1 to 8, wherein, each of the plurality of bending portions comprises an inner surface surrounding one of the plurality of insertion spaces, and an outer surface opposite the inner surface, and the second coating line is formed on the outer surface, preferably, the second coating line extends in a direction parallel to a third direction intersecting the first direction.

Aspect 10: The electrode assembly of any one of Aspects 1 to 9, wherein the second coating lines adjacent along the second direction are in contact with each other.

Aspect 11: The electrode assembly of any one of Aspects 1 to 10, wherein the second coating line is in contact with one of the first coating lines adjacent along the first direction.

Aspect 12: The electrode assembly of Aspect 11, wherein, the first coating line and the second coating line being in contact with each other causes an electrode placement portion to be formed on the plurality of support portions, and the positive electrode is disposed in the electrode placement portion.

Aspect 13: The electrode assembly of Aspect 12, wherein the positive electrode comprises a positive electrode coated portion comprising a positive electrode active material layer formed on a positive electrode collector, and a positive electrode uncoated portion formed outside the positive electrode coated portion, wherein the positive electrode satisfies Equation 1 below. [Equation 1] $1 < As / Ac \leq 1.2$

In Equation 1, As is an area of the electrode placement portion, and Ac is the area of the positive electrode coated portion.

Aspect 14: The electrode assembly of any one of Aspects 1 to 13, wherein the negative electrode comprises a lithium metal negative electrode.

Aspect 15: A secondary battery comprising: the electrode assembly of any one of Aspects 1 to 14; an exterior member accommodating the electrode assembly for a secondary battery; and an electrolyte accommodated with the electrode assembly within the exterior member.

The above described are merely examples of applying the principles of the present disclosure, and other configurations may be included without departing from the scope of the present disclosure.

## Claims

1. An electrode assembly for a secondary battery, comprising:
a positive electrode;
a negative electrode;
a separator shaped like a sheet extending along a first direction and bent in a zigzag shape; and
a second coating line formed on the separator,
wherein the bending of the separator causes a plurality of insertion spaces to be formed along a second direction,
the separator comprises a plurality of support portions and a plurality of bending portions, and
the second coating lines are formed in at least a portion of the plurality of bending portions.

2. The electrode assembly of claim 1, wherein (a) the second coating line has insulating properties, and/or (b) the second coating line has an electrolyte swelling degree of 20% or less, and/or (c) the second coating line has an adhesiveness.

3. The electrode assembly of claim 1 or 2, wherein the second coating line comprises at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

4. The electrode assembly of any one of claims 1 to 3, further comprising a first coating line formed on the separator,
wherein the first coating line and the second coating line extend in directions intersecting each other, and
the first coating lines are formed on at least a portion of the plurality of support portions.

5. The electrode assembly of any one of claims 1 to 4, wherein (a) the first coating line has insulating properties, and/or (b) the first coating line has an electrolyte swelling degree of 20% or less, and/or (c) the first coating line has an adhesiveness.

6. The electrode assembly of any one of claims 1 to 5, wherein the first coating line comprises at least one selected from the group consisting of polypropylene (PP), polyethylene (PE), polyethylene terephthalate (PET), polyimide (PI), a polypropylene-polyethylene-polypropylene (PP/PE/PP) material, polyvinylidene fluoride (PVdF), polyvinyl chloride (PVC), and polysulfone (PSU).

7. The electrode assembly of any one of claims 1 to 6, wherein the first coating line extends in a direction parallel to the first direction, and is formed as a pair spaced apart in a third direction intersecting the first direction.

8. The electrode assembly of any one of claims 1 to 7, wherein, each of the plurality of support portions comprises a support surface supporting the positive or negative electrode along the second direction, and a cover surface opposite the support surface, and
the first coating line is formed on the support surface.

9. The electrode assembly of any one of claims 1 to 8, wherein, each of the plurality of bending portions comprises an inner surface surrounding one of the plurality of insertion spaces, and an outer surface opposite the inner surface, and
the second coating line is formed on the outer surface, preferably, the second coating line extends in a direction parallel to a third direction intersecting the first direction.

10. The electrode assembly of any one of claims 1 to 9, wherein the second coating lines adjacent along the second direction are in contact with each other.

11. The electrode assembly of any one of claims 1 to 10, wherein the second coating line is in contact with one of the first coating lines adjacent along the first direction.

12. The electrode assembly of claim 11, wherein, the first coating line and the second coating line being in contact with each other causes an electrode placement portion to be formed on the plurality of support portions, and
the positive electrode is disposed in the electrode placement portion.

13. The electrode assembly of claim 12, wherein the positive electrode comprises a positive electrode coated portion comprising a positive electrode active material layer formed on a positive electrode collector, and a positive electrode uncoated portion formed outside the positive electrode coated portion,
wherein the positive electrode satisfies Equation 1 below. [Equation 1] $1 < As / Ac \leq 1.2$
In Equation 1, As is an area of the electrode placement portion, and Ac is the area of the positive electrode coated portion.

14. The electrode assembly of any one of claims 1 to 13, wherein the negative electrode comprises a lithium metal negative electrode.

15. A secondary battery comprising:
the electrode assembly of any one of claims 1 to 14;
an exterior member accommodating the electrode assembly for a secondary battery; and
an electrolyte accommodated with the electrode assembly within the exterior member.
